# EUROPÄISCHE PATENTSCHRIFT

(11) **EP 4 446 173 B1**
(45) Veröffentlichungstag und Bekanntmachung des Hinweises auf die Patenterteilung: **14.01.2026**
(21) Anmeldenummer: 24168710.2
(22) Anmeldetag: 05.04.2024
(51) Int. Cl.: B60R 19/56

(54) **UNTERFAHRSCHUTZ-BAUGRUPPE FÜR EIN KIPPERFAHRZEUG**
UNDERRUN PROTECTION ASSEMBLY FOR A TIPPER VEHICLE
ENSEMBLE DE PROTECTION ANTI-ENCASTREMENT POUR VEHICULE A BENNE BASCULANTE

(30) Priorität: 11.04.2023 DE 102023109101
(43) Veröffentlichungstag der Anmeldung: 16.10.2024
(73) Patentinhaber: Franz Xaver Meiller Fahrzeug- und Maschinenfabrik - GmbH & Co KG, 80997 München (DE)
(72) Erfinder: Augustin, Thomas, 85250 Altomünster (DE)
(74) Vertreter: Weickmann & Weickmann PartmbB

(56) Entgegenhaltungen:
- EP-A1- 0 298 471
- DE-U1- 8 324 904
- FR-A1- 3 125 768
- JP-A- H05 345 545
- US-A1- 2009 074 548
- US-B1- 6 814 378

## Beschreibung

Die vorliegende Erfindung betrifft eine Unterfahrschutz-Baugruppe für ein Kipperfahrzeug mit einem Fahrzeugkörper und einem gegenüber dem Fahrzeugkörper nach hinten kippbaren Kippaufbau sowie ein derartiges Kipperfahrzeug, umfassend eine erfindungsgemäße Unterfahrschutz-Baugruppe.

Unterfahrschutz-Einrichtungen für Lastentransportfahrzeuge und insbesondere Kipperfahrzeuge sind im Stand der Technik bekannt und umfassen im Allgemeinen eine längliche, horizontal angeordnete Unterfahrschutz-Barriere zur Sicherung eines heckseitigen Bereichs des Lastentransportfahrzeugs gegen das Auffahren bzw. Unterfahren durch ein anderes Fahrzeug. Die Unterfahrschutz-Barriere stellt somit für ein auffahrendes Fahrzeug einen definierten Kollisionsbereich bereit, welcher die Kollisionskräfte in die Knautschzone des auffahrenden Fahrzeugs einleitet. Da die Unterfahrschutz-Barriere jedoch in einigen Betriebszuständen des Fahrzeugs hinderlich sein kann, beispielsweise bei einem Entladen und insbesondere einem Kippen eines nach hinten kippbaren Kippaufbaus zum Abladen von Schüttgut oder ähnlichem, ist es bekannt, die Unterfahrschutz-Barriere abnehmbar oder aus ihrer Betriebsposition heraus in eine Freigabeposition verschwenkbar oder verschiebbar vorzusehen.

Eine zwischen einer den zu sichernden Bereich sperrenden Sicherungsstellung bzw. Betriebsposition und einer diesen Bereich freigebenden Freigabestellung bzw. Freigabeposition bewegbare Unterfahrschutz-Einrichtung ist beispielsweise aus der DE 93 07 389 U1 bekannt. Diese Unterfahrschutz-Einrichtung umfasst eine Unterfahrschutz-Barriere und eine Halterungsanordnung mit zwei in Längsrichtung der Unterfahrschutz-Barriere voneinander beabstandet angeordneten Halterungseinrichtungen zur Befestigung der Unterschutzbarriere am Heck des Fahrzeugs. Jede der Halterungseinrichtungen weist hierbei jeweils zwei durch ein Gelenk miteinander verbundene Halterungsschenkel auf, von denen jeweils ein erster Halterungsschenkel mit der Unterfahrschutz-Barriere gelenkig verbunden ist und ein zweiter Halterungsschenkel an einem am Heck des Fahrzeugs zu befestigenden Montageträger gelenkig angebracht ist, sodass die Unterfahrschutzbarriere durch eine Gelenkbewegung der Halterungsschenkel zwischen der Sicherungsstellung und der Freigabestellung bewegbar ist. Einer der beiden zweiten Halterungsschenkel ist hierbei durch eine Kolben-Zylinder-Anordnung schwenkbar angetrieben, wobei die Schwenkbewegung des angetriebenen zweiten Halterungsschenkels auf den anderen zweiten Halterungsschenkel über eine Treibstange übertragen wird. Die ersten Halterungsschenkel sind hierbei jeweils durch eine Spiralfeder in ihre Freigabestellungen vorgespannt.

Bei der in der DE 93 07 389 U offenbarten Unterfahrschutz-Einrichtung tritt in der praktischen Benutzung das Problem auf, dass ein störungsfreier Betrieb der Unterfahrschutz-Einrichtung nicht über längere Zeit gewährleistet werden kann. Insbesondere kann es auftreten, dass die Gelenkabschnitte und die Federn der bekannten Unterfahrschutzeinrichtung, welche während des Betriebs Witterungseinflüssen und Verunreinigungen ausgesetzt sind, unterschiedliche Reibungswiderstände, d.h. unterschiedliche Beweglichkeiten, aufweisen. In diesem Fall neigen die durch die Federn oder die Treibstange angetriebenen Halterungsschenkel zu einem Verklemmen oder Verkanten der Unterfahrschutz-Einrichtung.

Ferner sind aus dem Stand der Technik ebenfalls Unterfahrschutz-Einrichtungen für Kipperfahrzeuge bekannt, welche durch einen Bediener manuell betätigt werden können, d.h. zwischen ihrer jeweiligen Betriebsposition und einer Freigabeposition verlagerbar vorgesehen sind. Hierbei besteht jedoch stets die Gefahr einer Fehlbedienung bzw. eines Vergessens des Überführens der Unterfahrschutz-Baugruppe in ihre Betriebsposition, nachdem sie beispielsweise für einen Entladevorgang des Kippaufbaus in ihre Freigabeposition überführt worden war.

Weiterhin sind auch Unterfahrschutz-Baugruppen aus dem Stand der Technik bekannt, welche pneumatisch oder hydraulisch betätigte Linearaktuatoren umfassen und über Umlenkhebel und/oder Seilzüge eine Überführung der entsprechenden Unterfahrschutz-Barriere zwischen ihrer Betriebsposition und ihrer Freigabeposition bewirken. Derartige Ausführungsformen von Unterfahrschutz-Baugruppen erfordern jedoch einen erhöhten konstruktiven Aufwand, welcher sich sowohl in den Herstellungskosten als auch im Wartungsaufwand davon niederschlagen wird, wobei ferner weiterhin die Gefahr von Fehlfunktionen oder Fehlbedienungen besteht.

Des Weiteren sei auf die gattungsgemässe DE 83 24 904 U1, die EP 0 298 471 A1 und die US 2009/074548 A1 verwiesen, welche sämtlich Unterfahrschutz-Baugruppen für Kipperfahrzeuge mit horizontalen und zwischen einer Betriebsposition und einer Freigabeposition verlagerbaren Unterfahrschutz-Barrieren, Hebelanordnungen und Umlenkanordnungen zum Überführen der jeweiligen Unterfahrschutz-Barrieren zwischen den beiden genannten Positionen lehren.

Dementsprechend ist es die Aufgabe der vorliegenden Erfindung, eine verbesserte gattungsgemäße Unterfahrschutz-Baugruppe für ein Kipperfahrzeug bereitzustellen, welche einerseits kostengünstig herzustellen und einfach zu warten ist und welche andererseits zuverlässig hinsichtlich ihres Betriebs und ihrer Lebensdauer ist.

Zu diesem Zweck umfasst die erfindungsgemäße Unterfahrschutz-Baugruppe für ein Kipperfahrzeug mit einem Fahrzeugkörper und einem gegenüber dem Fahrzeugkörper nach hinten kippbaren Kippaufbau eine längliche, horizontale angeordnete Unterfahrschutz-Barriere zur Sicherung eines heckseitigen Bereichs des Kipperfahrzeugs gegen ein Auffahren bzw. Unterfahren durch ein anderes Fahrzeug, wobei die Unterfahrschutz-Barriere mittels zweier Barriere-Verbindungsabschnitte schwenkbar an jeweiligen Schnittstellen-Abschnitten des Fahrzeugkörpers angelenkt ist, um zwischen einer Betriebsposition und einer Freigabeposition verschwenkbar zu sein, eine Hebelanordnung, welche derart an dem Fahrzeugkörper angebunden ist, dass bei einer Betätigung der Hebelanordnung eine Überführung der Unterfahrschutz-Barriere zwischen ihrer Betriebsposition und ihrer Freigabeposition erreicht wird, und eine mit der Hebelanordnung gekoppelte Umlenkanordnung, welche andererseits derart mit dem Kippaufbau gekoppelt ist, dass ein Kippen des Kippaufbaus durch die Umlenkanordnung derart umgelenkt und auf die Hebelanordnung eingewirkt wird, dass hierdurch eine Betätigung der Hebelanordnung ausgelöst wird.

Dementsprechend wird durch die erfindungsgemäße Unterfahrschutz-Baugruppe eine direkte mechanische Kopplung zwischen der Unterfahrschutz-Barriere und dem Kippaufbau des entsprechenden Kipperfahrzeugs hergestellt, welche dafür sorgt, dass ein Kippen des Kippaufbaus nach hinten unmittelbar und ohne weitere notwendige Betätigung durch einen Bediener ein Überführen der Unterfahrschutz-Barriere in ihre Freigabeposition auslöst, während ein entgegengesetztes Überführen des Kippaufbaus zurück in seine horizontale Fahrposition dazu führen wird, dass die Unterfahrschutz-Barriere zu ihrer Betriebsposition zurückgeschwenkt wird. Dementsprechend wird eine automatische Betätigung der Unterfahrschutz-Baugruppe im Zusammenhang mit einem Kippen des Kippaufbaus bewirkt, wodurch gleichzeitig beide Endlagen der Unterfahrschutz-Barriere in den jeweiligen entsprechenden Betriebszuständen des Fahrzeugs sichergestellt werden, ohne dass eine zusätzliche Überwachung oder Betätigung durch einen Anwender oder Bediener notwendig werden würde.

Indem somit die Funktion der Unterfahrschutz-Baugruppe stets abhängig von einer Bewegung des Kippaufbaus ausgeführt wird, ist auch keine hydraulische, pneumatische, elektrische oder manuelle Betätigung davon mehr erforderlich. Dementsprechend kann auf komplizierte und teure Ventiltechnik sowie eine entsprechende Anpassung des jeweiligen Fahrzeugs verzichtet werden. Weiterhin ist auch keine Sensorik für die Position der Unterfahrschutz-Barriere erforderlich, da die Lage des Kippaufbaus unmittelbar die Lage der Unterfahrschutz-Barriere vorgibt.

Somit können durch die vorliegende Erfindung bei der Herstellung entsprechender Kipperfahrzeuge Kosten durch eine Reduzierung von Elektrik- und Pneumatik- und/oder Hydraulikteilen und den zugehörigen Stahlbauteilen eingespart werden, während gleichzeitig bereits eingesetzte Typen von Unterfahrschutz-Systemen mit lediglich geringen Anpassungen an den Fahrzeugkörper des Kipperfahrzeugs sowie den Kippaufbau verwendet werden können.

Damit auf ein Kippen des Kippaufbaus hin eine Betätigung der Hebelanordnung ausgelöst werden kann, umfasst die Umlenkanordnung erfindungsgemäss ein Langloch und ein in dem Langloch geführtes Mitnehmerelement, wobei das Mitnehmerelement vorzugsweise durch ein Rollenelement gebildet ist und/oder das Langloch in einem Blechbauteil ausgeführt ist. Auf diese Weise wird eine kostengünstige, jedoch gleichzeitig betriebssichere Umlenkanordnung geschaffen, wobei durch die konkrete Gestaltung des Langlochs hinsichtlich seiner geometrischen Form und Abmessungen eine gewünschte Umsetzung der Kippbewegung des Kippaufbaus und Übertragung davon auf die Hebelanordnung erzielt werden kann. Hierbei ist erfindungsgemäß das Langloch dem Kippaufbau zugeordnet und das Mitnehmerelement einem mit der Hebelanordnung gekoppelten Umlenkhebel zugeordnet, welcher schwenkbar an dem Fahrzeugkörper angelenkt ist. Indem hierbei die Hebelverhältnisse des Umlenkhebels bzgl. seiner Schwenkachse gegenüber dem Fahrzeugkörper geeignet gewählt werden, kann an dieser Stelle dafür gesorgt werden, dass eine relativ kurze Bewegungsstrecke des Mitnehmerelements in dem Langloch in einen relativ großen Bewegungsbereich der Hebelanordnung übersetzt wird.

Zu diesem Zweck kann die Schwenkachse des Umlenkhebels insbesondere an dem Fahrzeugkörper in unmittelbarer Nähe der Kippachse des Kippaufbaus angeordnet sein, was zudem Bauraum an dem Kipperfahrzeug nutzt, der für andere Zwecke nicht verwendbar wäre.

Weiterhin kann der Umlenkhebel mit zwei unter einem Winkel zueinander stehenden Schenkeln gebildet sein, von welchen einer das Mitnehmerelement trägt und der andere mit der Hebelanordnung verbunden ist, wobei der Umlenkhebel im Bereich seines Scheitels zwischen den beiden Schenkeln schwenkbar an dem Fahrzeugkörper angeordnet ist. Insbesondere können hierbei die beiden Schenkel in einer Richtung senkrecht zu der von ihnen aufgespannten Ebene beabstandet und mittels eines Wellenelements drehfest miteinander verbunden sein, wodurch ebenfalls eine optimale Ausnutzung des an dieser Stelle des Kipperfahrzeugs zur Verfügung stehenden Bauraums erzielt wird.

Alternativ oder zusätzlich kann der Umlenkhebel derart an dem Fahrzeugkörper angelenkt sein, dass eine Bewegung des Mitnehmerelements in dem Langloch in eine Bewegung über eine größere Bewegungsstrecke an dem entgegengesetzten Ende des Umlenkhebels übersetzt wird, insbesondere indem der dem Mitnehmerelement zugeordnete Schenkel kürzer ausgebildet wird als der mit der Hebelanordnung verbundene Schenkel.

In einer besonders vorteilhaften Ausgestaltung kann ferner das Langloch sichelförmig mit einem ersten und einem zweiten Abschnitt sowie einem Scheitel zwischen dem ersten und dem zweiten Abschnitt gebildet sein, wobei ein Durchlaufen des ersten Abschnitts durch das Mitnehmerelement eine Betätigung der Hebelanordnung bewirkt und ein anschließendes Durchlaufen des zweiten Abschnitts die Hebelanordnung im Wesentlichen kräftefrei belässt. Somit wird lediglich während des Durchlaufens des ersten Abschnitts des Langlochs durch das Mitnehmerelement die eigentliche Überführung der Unterfahrschutz-Barriere zwischen ihrer Betriebsposition und ihrer Freigabeposition hervorgerufen, während bei einem anschließenden Durchlaufen des zweiten Abschnitts durch das Mitnehmerelement eine weitere Kippbewegung des Kippaufbaus über einen zusätzlichen Kippwinkel erlaubt wird, was jedoch keine Auswirkungen mehr auf die momentane Position der Unterfahrschutz-Barriere haben wird. Dementsprechend können durch eine derartige Ausgestaltung Fälle und Fahrzeuggeometrien abgedeckt werden, in welchen während eines Kippvorgangs des Kippaufbaus bereits vor einem Erreichen des maximal gekippten Zustands davon die Unterfahrschutz-Barriere in ihre Freigabeposition übergegangen sein muss, beispielsweise um an dieser Stelle das Beenden der Kippbewegung des Kippaufbaus zu ermöglichen, ohne dass der Kippaufbau von der Unterfahrschutz-Barriere oder einer anderen Komponente der Unterfahrschutz-Baugruppe beeinträchtigt wird.

Die Hebelanordnung der erfindungsgemäßen Unterfahrschutz-Baugruppe kann insbesondere ein Stangenelement, welches im Bereich eines ersten Endes schwenkbar mit der Umlenkanordnung gekoppelt ist, und ein erstes und ein zweites Verbindungselement umfassen, welche jeweils im Bereich eines zweiten Endes schwenkbar mit dem Stangenelement gekoppelt sind, wobei das erste Verbindungselement schwenkbar an einem der Schnittstellenabschnitte des Fahrzeugkörpers angelenkt ist, während das zweite Verbindungselement schwenkbar an dem Barriere-Verbindungsabschnitt der entsprechenden Unterfahrschutz-Barriere angelenkt ist. Auf diese Weise kann die zunächst einmal im Wesentlichen lineare Bewegung der Hebelanordnung, welche durch die Umlenkanordnung bei einem Kippen des Kippaufbaus hervorgerufen wird, in die gewünschte Schwenkbewegung der Unterfahrschutz-Barriere umgesetzt werden. Auch an dieser Stelle kann durch eine geeignete Wahl der Hebelverhältnisse, insbesondere bezüglich der Längen des ersten und des zweiten Verbindungselements sowie ihrer jeweiligen Anbindungspunkte eine Übersetzung erzielt werden, welche es ermöglicht, eine Bewegung der Umlenkanordnung über lediglich einen kleinen Bewegungsbereich in ein Schwenken der Unterfahrschutz-Barriere über einen großen Winkelbereich zu übersetzen.

Insbesondere können hierzu das erste und das zweite Verbindungselement mittels einer gemeinsamen Schwenkachse an dem Stangenelement angelenkt sein, was zusätzlich Bauraum und Montageaufwand einspart.

Weiterhin kann vorgesehen sein, dass das Verschwenken der Unterfahrschutz-Barriere zwischen ihrer Betriebsposition und ihrer Freigabeposition über einen Winkelbereich von etwa 180° abläuft, sodass die Unterfahrschutz-Barriere in ihrer Freigabeposition im Wesentlichen entgegengesetzt zu ihrer Betriebsposition bezüglich ihrer Schwenkachse an den Schnittstellen-Abschnitten ausgerichtet ist.

Wenngleich eine einzelne erfindungsgemäße Unterfahrschutz-Baugruppe an lediglich einer rechten oder einer linken Seite des damit ausgestatteten Fahrzeugs im Bereich von entsprechenden Schnittstellen-Abschnitten des Fahrzeugkörpers vorgesehen sein kann, um alleine die Überführung der Unterfahrschutz-Barriere zwischen ihrer Betriebsposition und ihrer Freigabeposition zu bewirken, so könnten in einer alternativen Ausführungsform auch jeweils zwei Hebelanordnungen und zwei Umlenkanordnungen vorgesehen sein, welche jeweils mit der einzelnen Unterfahrschutz-Barriere gekoppelt sind und sich einander in Breitenrichtung des Kipperfahrzeugs im Bereich der beiden Schnittstellen-Abschnitte des Fahrzeugkörpers gegenüberliegen. Hierdurch könnte eine verbesserte Kraftaufteilung zwischen den beiden Hebelanordnungen sowie Umlenkanordnungen erzielt werden, sodass diese ggf. jeweils kleiner oder mit geringerer Materialstärke ausgebildet werden könnten.

Gemäß einem zweiten Aspekt betrifft die vorliegende Erfindung ein Kipperfahrzeug mit einem Fahrzeugkörper und einem gegenüber dem Fahrzeugkörper nach hinten kippbaren Kippaufbau, ferner umfassend eine erfindungsgemäße Unterfahrschutz-Baugruppe der eben beschriebenen Art. Hierbei kann die Unterfahrschutz-Barriere in ihrer Freigabeposition zwischen dem Fahrzeugkörper und dem Kippaufbau angeordnet sein, was beispielsweise durch das oben bereits angesprochene Verschwenken der Unterfahrschutz-Barriere zwischen ihrer Betriebsposition und ihrer Freigabeposition über einen Winkelbereich von etwa 180° bei einem gleichzeitigen Kippen des Kippaufbaus nach hinten erzielt werden kann.

Weiterhin kann ferner der Kippaufbau des Kipperfahrzeugs derart mit dem Fahrzeugkörper gekoppelt sein, dass bei einem Kippen davon ein Winkel von etwa 47° überstrichen wird, bis eine Kipp-Endposition erzielt wird. Dementsprechend wäre es in der oben beschriebenen Ausführungsform notwendig, die einzelnen Komponenten der Unterfahrschutz-Baugruppe derart hinsichtlich ihrer Hebelverhältnisse und Übersetzungen auszugestalten, dass dieser Winkel von 47° eines Kippens des Kippaufbaus in einen Schwenkwinkel von 180° der Unterfahrschutz-Barriere umgesetzt werden würde.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1-3: eine erfindungsgemäße Unterfahrschutz-Baugruppe in ihrer Betriebsposition, einer Zwischenposition und ihrer Freigabeposition, jeweils in schematischer Seitenansicht; und
- Fig. 4: eine schräge Seitenansicht eines Teils der Unterfahrschutz-Baugruppe aus den Figuren 1 bis 3 zur Verdeutlichung einiger konstruktiver Details.

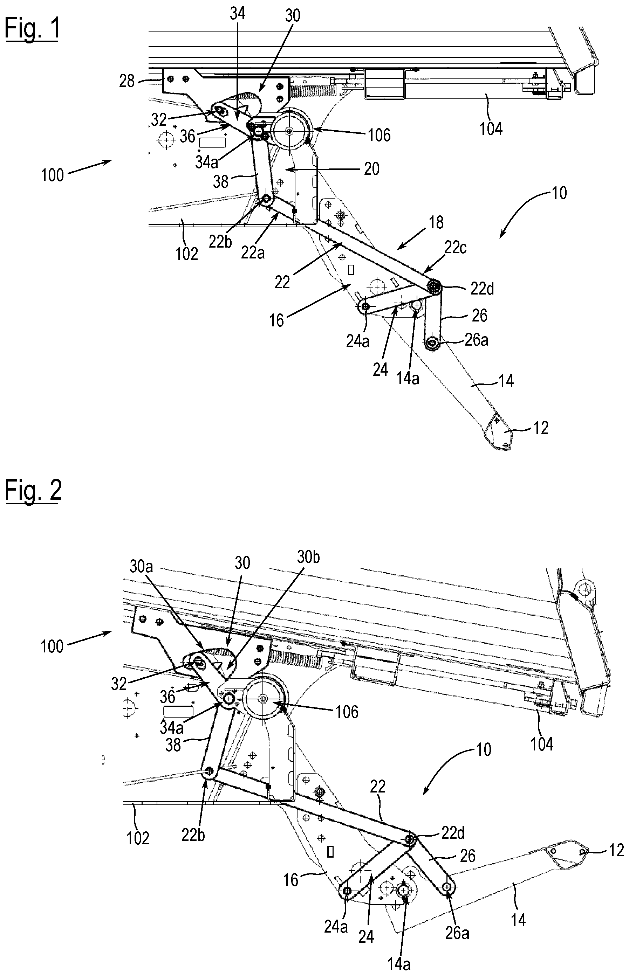

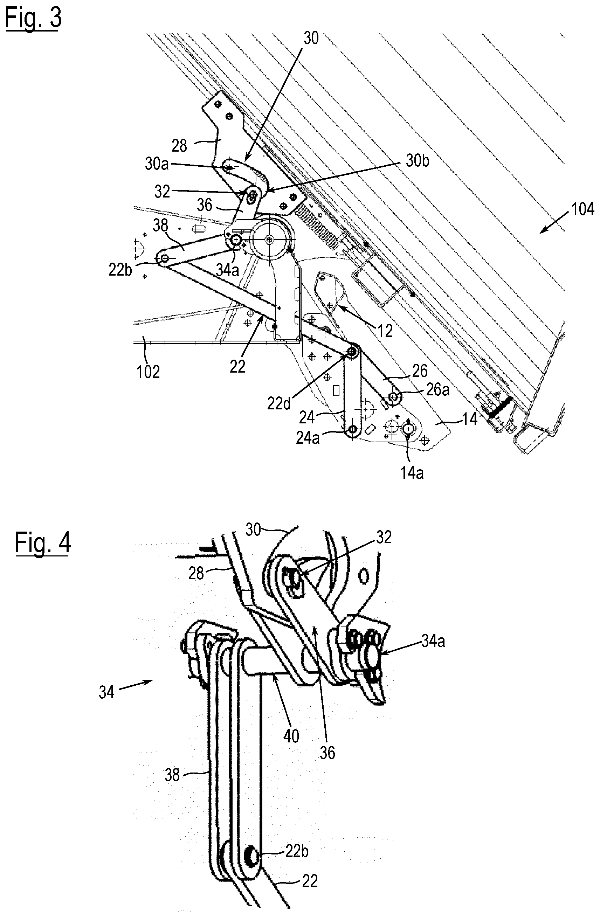

In den Figuren 1 bis 3 ist eine erfindungsgemäße Unterfahrschutz-Baugruppe für ein Kipperfahrzeug jeweils in einer schematischen Seitenansicht dargestellt und ganz allgemein mit dem Bezugszeichen 10 bezeichnet. Das Kipperfahrzeug 100 ist dem hingegen lediglich abschnittsweise dargestellt, insbesondere ist ein hinterer unterer Teil des Fahrzeugkörpers 102 ebenso wie der gegenüber dem Fahrzeugkörper 102 nach hinten kippbare Kippaufbau 104 dargestellt, wobei diese Kippbewegung um eine Kippachse 106 herum abläuft. Wie sich aus den Figuren 1 bis 3 erkennen lässt, läuft die Kippbewegung des Kippaufbaus 104 gegenüber dem Fahrzeugkörper 102 aus der horizontalen Fahrposition des Kippaufbaus 104 über einen Winkelbereich von etwa 47° ab, wobei ein entsprechender maximal gekippter Zustand des Kippaufbaus 104 in Fig. 3 gezeigt wird und die Fig. 2 einen Zwischenzustand zeigt, in welchem ein Kippen des Kippaufbaus 104 erst über einen Winkel von etwa 10° gegenüber dem Fahrzeugkörper 102 stattgefunden hat.

Hierbei umfasst die Unterfahrschutz-Baugruppe 10 eine in den Ansichten aus den Figuren 1 bis 3 lediglich schematisch dargestellte längliche, horizontal angeordnete Unterfahrschutz-Barriere 12, welche sich in Fig. 1 in ihrer regulären Betriebsposition befindet, während sie über den Zwischenzustand aus Fig. 2 schließlich in Fig. 3 in ihre Freigabeposition überführt bzw. verschwenkt worden ist, in welcher sie der Kippbewegung des Kippaufbaus 104 nicht im Wege steht bzw. ein freies Abladen von Schüttgut aus dem Kippaufbau 104 ermöglicht.

Hierbei ist die Unterfahrschutz-Barriere 12 mittels zweier Barriere-Verbindungsabschnitte 14, von welchen in den Seitenansichten aus den Figuren 1 bis 3 jeweils lediglich ein einzelner zu erkennen ist, schwenkbar um eine Schwenkachse 14a an jeweiligen Schnittstellenabschnitten 16 des Fahrzeugkörpers 102 angelenkt.

Um nun die bereits angesprochene Schwenkbewegung der Unterfahrschutz-Barriere 12 zwischen ihrer in Fig. 1 gezeigten Betriebsposition und ihrer in Fig. 3 gezeigten Freigabeposition zu ermöglichen, sind ferner eine Hebelanordnung 18 und eine Umlenkanordnung 20 vorgesehen, welche dazu angeordnet und eingerichtet sind, ein Kippen des Kippaufbaus 104 in ein Schwenken der Unterfahrschutz-Barriere 12 umzulenken und zu übersetzen. Zu diesem Zweck umfasst die Hebelanordnung 18 ein Stangenelement 22, welches im Bereich eines ersten Endes 22a mittels einer Schwenkachse 22b in einer weiter unten noch beschriebenen Weise mit der Umlenkanordnung 20 gekoppelt ist, während an dem gegenüberliegenden zweiten Ende 22c des Stangenelements 22 mittels einer gemeinsamen weiteren Schwenkachse 22d ein erstes Verbindungselement 24 und ein zweites Verbindungselement 26 jeweils schwenkbar mit dem Stangenelement 22 gekoppelt sind. Hierbei ist das erste Verbindungselement 24 mittels einer entsprechenden Schwenkachse 24a schwenkbar an dem entsprechenden Schnittstellen-Abschnitt 16 des Fahrzeugkörpers 102 angelenkt und das zweite Verbindungselement 26 mittels einer entsprechenden Schwenkachse 26a schwenkbar an dem Barriere-Verbindungsabschnitt 14 der Unterfahrschutz-Barriere 12 angelenkt.

Die bereits angesprochene Umlenkanordnung 20 umfasst wiederum ein in einem dem Kippaufbau 104 zugeordneten Blechbauteil 28 vorgesehenes, sichelförmig ausgebildetes Langloch 30 mit einem ersten Abschnitt 30a und einem zweiten Abschnitt 30b sowie ein Mitnehmerelement 32, welches durch ein Rollenelement gebildet und in dem Langloch geführt ist. Dieses Rollenelement 32 ist wiederum einem mit der Hebelanordnung 18 über die bereits angesprochene Schwenkachse 22b gekoppelten Umlenkhebel 34 zugeordnet, welcher seinerseits schwenkbar über eine Schwenkachse 34a in unmittelbarer Nähe der Kippachse 106 des Kippaufbaus 104 an dem Fahrzeugkörper 102 angelenkt ist.

Hierbei ist der Umlenkhebel 34, wie insbesondere in der schrägen Seitenansicht aus Fig. 4 zu erkennen ist, mit zwei unter einem Winkel zueinander stehenden Schenkeln 36 und 38 gebildet, bei welchen der zweiteilig ausgeführte erste Schenkel 36 das Mitnehmerelement 32 von beiden Seiten trägt und der andere Schenkel 38 mit der Hebelanordnung 18 und insbesondere dem Stangenelement 22 über die bereits angesprochene Schwenkachse 22b gekoppelt ist. Hierbei ist in der gezeigten Ausführungsform aus Platzgründen zwischen den beiden Schenkeln 36 und 38 ein senkrecht zu der von ihnen aufgespannten Ebene verlaufendes und fest mit den beiden Schenkeln 36 und 38 verbundenes Wellenelement 40 vorgesehen, welches gleichzeitig die Funktion der Schwenkachse 34a des Umlenkhebels 34 übernimmt.

Hinsichtlich der Funktionsweise der Unterfahrschutz-Baugruppe sei nunmehr zunächst einmal der Übergang zwischen dem Zustand aus Fig. 1, entsprechend der Betriebsposition der Unterfahrschutz-Barriere, und der Zwischenposition aus Fig. 2 betrachtet. Hierbei zeigt sich, dass bereits bei einer Kippbewegung des Kippaufbaus 104 um lediglich 10° eine erhebliche Schwenkbewegung der Unterfahrschutz-Barriere 12 um die Schwenkachse 14a herum stattgefunden hat, da durch die Längenverhältnisse des Umlenkhebels 34 und der ersten und zweiten Verbindungselemente 26 sowie die Positionen ihrer jeweiligen schwenkbaren Anbindungspunkte ein günstiges Hebelverhältnis erzielt wird, welches die Kippbewegung des Kippaufbaus 104 von 10° in einen wesentlich größeren Schwenkwinkel der Unterfahrschutz-Barriere 12 übersetzt hat.

Betrachtet man nun zusätzlich den Übergang zwischen Fig. 2 und Fig. 3, so zeigt sich, dass bei einem Durchlaufen des Mitnehmerelements 32 durch den ersten Abschnitt 30a des sichelförmigen Langlochs 30 dieses bei einem gewissen Kippwinkel des Kippaufbaus 104 den Scheitel zwischen den beiden Abschnitten 30a, 30b des Langlochs 30 erreichen wird, wobei zu diesem Zeitpunkt bereits eine vollständige Überführung der Unterfahrschutz-Barriere 12 in ihre Freigabeposition stattgefunden hat.

Anschließend ist jedoch durch ein weiteres Durchlaufen des zweiten Abschnitts 30b des Langlochs 30 durch das Mitnehmerelement eine weitere Kippbewegung des Kippaufbaus 104 ermöglicht, ohne dass die Unterfahrschutz-Barriere 12 weiter schwenken würde, sodass sichergestellt ist, dass die Unterfahrschutz-Barriere 12 während einer Kippbewegung des Kippaufbaus 104 rechtzeitig in ihre Freigabeposition überführt ist, um die vollständige Kippbewegung des Kippaufbaus 104 über die vorgesehenen 47° ohne Beeinträchtigung davon zu ermöglichen.

Hierbei versteht sich, dass bei einem Rückkippen des Kippaufbaus in seine horizontale Fahrposition die Zustände aus den Figuren 3, 2 und 1 in umgekehrter Reihenfolge in gleicher Weise durchlaufen werden, d.h. zunächst einmal ein bestimmter Bereich der Kippbewegung derart abläuft, dass das Mitnehmerelement 32 in dem zweiten Abschnitt 30b des Langlochs 30 läuft und noch keine Schwenkbewegung der Unterfahrschutz-Barriere auslöst, während anschließend bei einem Eintreten des Mitnehmerelements 32 in den ersten Abschnitt 30a des Langlochs 30 durch die Übersetzung mittels der Hebelverhältnisse der Komponenten der Unterfahrschutz-Baugruppe ein vollständiges Schwenken der Unterfahrschutz-Barriere 12 über volle 180° in einem relativ kleinen Kippbereich des Kippaufbaus 104 erzielt wird.

## Patentansprüche

1. Unterfahrschutz-Baugruppe (10) für ein Kipperfahrzeug (100) mit einem Fahrzeugkörper (102) und einem gegenüber dem Fahrzeugkörper (102) nach hinten kippbaren Kippaufbau (104), umfassend:
- eine längliche, horizontal angeordnete Unterfahrschutz-Barriere (12) zur Sicherung eines heckseitigen Bereichs des Kipperfahrzeugs (100) gegen ein Auffahren bzw. Unterfahren durch ein anderes Fahrzeug,
wobei die Unterfahrschutz-Barriere (12) mittels zweier Barriere-Verbindungsabschnitte (14) schwenkbar an jeweiligen Schnittstellen-Abschnitten (16) des Fahrzeugkörpers (102) angelenkt ist, um zwischen einer Betriebsposition und einer Freigabeposition verschwenkbar zu sein;
- eine Hebelanordnung (18), welche dazu eingerichtet und derart an dem Fahrzeugkörper (102) angebunden ist, dass bei einer Betätigung der Hebelanordnung (18) eine Überführung der Unterfahrschutz-Barriere (12) zwischen ihrer Betriebsposition und ihrer Freigabeposition erreicht wird; und
- eine mit der Hebelanordnung (18) gekoppelte Umlenkanordnung (20), welche andererseits derart mit dem Kippaufbau (104) gekoppelt ist, dass ein Kippen des Kippaufbaus (104) durch die Umlenkanordnung (20) derart umgelenkt und auf die Hebelanordnung (18) eingewirkt wird, dass hierdurch eine Betätigung der Hebelanordnung (18) ausgelöst wird,
wobei die Umlenkanordnung (20) ein Langloch (30) und ein in dem Langloch (30) geführtes Mitnehmerelement (32) umfasst, wobei das Mitnehmerelement (32) vorzugsweise durch ein Rollenelement gebildet ist und/oder das Langloch (30) in einem Blechbauteil (28) ausgeführt ist,
**dadurch gekennzeichnet, dass** das Langloch (30) dem Kippaufbau (104) zugeordnet ist und das Mitnehmerelement (32) einem mit der Hebelanordnung (18) gekoppelten Umlenkhebel (34) zugeordnet ist, welcher schwenkbar an dem Fahrzeugkörper (102) angelenkt ist.

2. Unterfahrschutz-Baugruppe (10) nach Anspruch 1,
wobei die Schwenkachse (34a) des Umlenkhebels (34) an dem Fahrzeugkörper (102) in unmittelbarer Nähe der Kippachse (106) des Kippaufbaus (104) angeordnet ist.

3. Unterfahrschutz-Baugruppe (10) nach Anspruch 1 oder 2,
wobei der Umlenkhebel (34) mit zwei unter einem Winkel zueinander stehenden Schenkeln (36, 38) gebildet ist, von welchen einer das Mitnehmerelement (32) trägt und der andere mit der Hebelanordnung (18) verbunden ist, wobei der Umlenkhebel (34) im Bereich seines Scheitels zwischen den beiden Schenkeln (36, 38) schwenkbar an dem Fahrzeugkörper (102) angelenkt ist.

4. Unterfahrschutz-Baugruppe (10) nach Anspruch 3,
wobei die beiden Schenkel (36, 38) in einer Richtung senkrecht zu der von ihnen aufgespannten Ebene beabstandet und mittels eines Wellenelements (40) drehfest miteinander verbunden sind.

5. Unterfahrschutz-Baugruppe (10) nach einem der vorhergehenden Ansprüche,
wobei der Umlenkhebel (34) derart an dem Fahrzeugkörper (102) angelenkt ist, dass eine Bewegung des Mitnehmerelements (32) in dem Langloch (30) in eine Bewegung über eine größere Bewegungsstrecke an dem entgegengesetzten Ende des Umlenkhebels (34) übersetzt wird, insbesondere indem der dem Mitnehmerelement (34) zugeordnete Schenkel (36) kürzer ausgebildet ist als der mit der Hebelanordnung (18) verbundene Schenkel (38).

6. Unterfahrschutz-Baugruppe (10) nach einem der vorhergehenden Ansprüche,
wobei das Langloch (30) sichelförmig mit einem ersten und einem zweiten Abschnitt (30a, 30b) sowie einem Scheitel zwischen dem ersten und zweiten Abschnitt (30a, 30b) gebildet ist, wobei ein Durchlaufen des ersten Abschnitts (30a) durch das Mitnehmerelement (32) eine Betätigung der Hebelanordnung (18) bewirkt und ein anschließendes Durchlaufen des zweiten Abschnitts (30b) die Hebelanordnung (18) im Wesentlichen kräftefrei belässt.

7. Unterfahrschutz-Baugruppe (10) nach einem der vorhergehenden Ansprüche,
wobei die Hebelanordnung (18) umfasst:
- ein Stangenelement (22), welches im Bereich eines ersten Endes schwenkbar mit der Umlenkanordnung (20) gekoppelt ist; und
- ein erstes und ein zweites Verbindungselement (24, 26), welche jeweils im Bereich eines zweiten Endes davon schwenkbar mit dem Stangenelement (22) gekoppelt sind,
wobei:
∘ das erste Verbindungselement (24) schwenkbar an einem der Schnittstellen-Abschnitte (16) des Fahrzeugkörpers (102) angelenkt ist; und
∘ das zweite Verbindungselement (26) schwenkbar an dem Barriere-Verbindungsabschnitt (14) der entsprechenden Unterfahrschutz-Barriere (12) angelenkt ist.

8. Unterfahrschutz-Baugruppe (10) nach Anspruch 7,
wobei das erste und das zweite Verbindungselement (24, 26) mittels einer gemeinsamen Schwenkachse (22d) an dem Stangenelement (22) angelenkt sind.

9. Unterfahrschutz-Baugruppe (10) nach einem der vorhergehenden Ansprüche,
wobei das Verschwenken der Unterfahrschutz-Barriere (12) zwischen ihrer Betriebsposition und ihrer Freigabeposition über einen Winkelbereich von etwa 180° verläuft.

10. Unterfahrschutz-Baugruppe nach einem der vorhergehenden Ansprüche, umfassend jeweils zwei Hebelanordnungen und zwei Umlenkanordnungen, welche jeweils mit der einzelnen Unterfahrschutz-Barriere gekoppelt sind und sich einander in Breitenrichtung des Kipperfahrzeugs im Bereich der beiden Schnittstellen-Abschnitte des Fahrzeugkörpers gegenüberliegen.

11. Kipperfahrzeug (100) mit einem Fahrzeugkörper (102) und einem gegenüber dem Fahrzeugkörper (102) nach hinten kippbaren Kippaufbau (104), ferner umfassend eine Unterfahrschutz-Baugruppe (10) nach einem der vorhergehenden Ansprüche.

12. Kipperfahrzeug (100) nach Anspruch 11,
wobei die Unterfahrschutz-Barriere (12) in ihrer Freigabeposition zwischen dem Fahrzeugkörper (102) und dem Kippaufbau (104) angeordnet ist.

13. Kipperfahrzeug (100) nach Anspruch 11 oder 12,
wobei der Kippaufbau (104) derart mit dem Fahrzeugkörper (102) gekoppelt ist, dass bei einem Kippen davon ein Winkel von etwa 47° überstrichen wird.

## Claims

1. Underrun protection assembly (10) for a tipper vehicle (100) with a vehicle body (102) and a tipping superstructure (104) that can be tipped rearwards relative to the vehicle body (102), comprising:
- a longitudinal, horizontally arranged underrun protection barrier (12) for safeguarding a rear region of the tipper vehicle (100) against running into and/or underrunning by another vehicle,
wherein the underrun protection barrier (12) is pivotally articulated to respective interface sections (16) of the vehicle body (102) by means of two barrier connection sections (14), so as to be pivotable between an operating position and a release position;
- a lever arrangement (18) which is configured and connected to the vehicle body (102) such that, upon actuation of the lever arrangement (18), a transfer of the underrun protection barrier (12) between its operating position and its release position is achieved; and
- a deflection arrangement (20) coupled to the lever arrangement (18), which on the other hand is coupled to the tipping superstructure (104) in such a way that tilting of the tipping superstructure (104) is redirected by the deflection arrangement (20) and acts on the lever arrangement (18) so as to trigger actuation of the lever arrangement (18),
wherein the deflection arrangement (20) comprises an oblong hole (30) and a driver element (32) guided in the oblong hole (30), the driver element (32) preferably being formed by a roller element and/or the oblong hole (30) being formed in a sheet-metal component (28),
**characterised in that** the oblong hole (30) is associated with the tipping superstructure (104), and the driver element (32) is associated with a deflection lever (34) coupled to the lever arrangement (18), which is pivotally articulated to the vehicle body (102).

2. Underrun protection assembly (10) according to Claim 1,
wherein the pivot axis (34a) of the deflection lever (34) is arranged on the vehicle body (102) in the immediate vicinity of the tipping axis (106) of the tipping superstructure (104).

3. Underrun protection assembly (10) according to Claim 1 or 2,
wherein the deflection lever (34) is formed with two arms (36, 38) which are at an angle to one another, one of which carries the driver element (32) and the other of which is connected to the lever arrangement (18), the deflection lever (34) being pivotally articulated to the vehicle body (102) in the region of its apex between the two arms (36, 38).

4. Underrun protection assembly (10) according to Claim 3,
wherein the two arms (36, 38) are spaced apart in a direction perpendicular to the plane spanned by them and are connected to one another in a rotationally fixed manner by means of a shaft element (40).

5. Underrun protection assembly (10) according to any of the preceding claims,
wherein the deflection lever (34) is articulated to the vehicle body (102) such that movement of the driver element (32) in the oblong hole (30) is converted into a movement over a greater stroke at the opposite end of the deflection lever (34), in particular in that the arm (36) associated with the driver element (34) is made shorter than the arm (38) connected to the lever arrangement (18).

6. Underrun protection assembly (10) according to any of the preceding claims,
wherein the oblong hole (30) is formed in a sickle shape with a first and a second section (30a, 30b) and an apex between the first and second sections (30a, 30b), wherein a passing through the first section (30a) by the driver element (32) causing actuation of the lever arrangement (18) and a subsequent passing through the second section (30b) leaving the lever arrangement (18) essentially force-free.

7. Underrun protection assembly (10) according to any of the preceding claims,
wherein the lever arrangement (18) comprises:
- a rod element (22) which is pivotally coupled to the deflection arrangement (20) in the region of a first end; and
- a first and a second connection element (24, 26), each of which is pivotally coupled to the rod element (22) in the region of a second end thereof,
wherein:
- the first connection element (24) is pivotally articulated to one of the interface sections (16) of the vehicle body (102); and
- the second connection element (26) is pivotally articulated to the barrier connection section (14) of the corresponding underrun protection barrier (12).

8. Underrun protection assembly (10) according to Claim 7,
wherein the first and the second connection element (24, 26) are articulated to the rod element (22) by means of a common pivot axis (22d).

9. Underrun protection assembly (10) according to any of the preceding claims,
wherein the pivoting of the underrun protection barrier (12) between its operating position and its release position extends over an angular range of about 180°.

10. Underrun protection assembly according to any of the preceding claims,
comprising in each case two lever arrangements and two deflection arrangements, which are each coupled to the single underrun protection barrier and are opposite one another in the width direction of the tipper vehicle in the region of the two interface sections of the vehicle body.

11. Tipper vehicle (100) with a vehicle body (102) and a tipping superstructure (104) that can be tipped rearwards relative to the vehicle body (102), further comprising an underrun protection assembly (10) according to any of the preceding claims.

12. Tipper vehicle (100) according to Claim 11,
wherein the underrun protection barrier (12), in its release position, is arranged between the vehicle body (102) and the tipping superstructure (104).

13. Tipper vehicle (100) according to Claim 11 or 12,
wherein the tipping superstructure (104) is coupled to the vehicle body (102) such that, upon tipping thereof, an angle of about 47° is exceeded.

## Revendications

1. Un ensemble de protection anti-encastrement (10) pour un véhicule à benne basculante (100) avec une carrosserie (102) et une structure basculante (104) pouvant basculer vers l'arrière par rapport à la carrosserie (102), comprenant :
- une barrière de protection anti-encastrement (12) allongée, disposée horizontalement, pour protéger une zone arrière du véhicule à benne basculante (100) contre un encastrement ou un autre véhicule, la barrière anti-encastrement (12) étant articulée de manière pivotante au moyen de deux sections de liaison de barrière (14) au niveau de sections d'intersection respectives (16) de la carrosserie (102) du véhicule afin de pouvoir pivoter entre une position de fonctionnement et une position de libération ;
- un dispositif à levier (18) qui est conçu et relié à la carrosserie du véhicule (102) de telle sorte que, lorsqu'on actionne le dispositif à levier (18), la barrière anti-encastrement (12) passe de sa position de fonctionnement à sa position de libération, et
- un dispositif de renvoi (20) couplé au dispositif à levier (18) qui, d'autre part, est couplé à la structure basculante (104) de telle sorte qu'un basculement de la structure basculante (104) est dévié par le dispositif de renvoi (20) et agit sur le dispositif à levier (18) de telle sorte qu'un actionnement du dispositif à levier (18) est déclenché,
dans lequel le dispositif de renvoi (20) comprend un trou oblong (30) et un élément d'entraînement (32) guidé dans le trou oblong (30), l'élément d'entraînement (32) étant de préférence formé par un élément roulant et/ou le trou oblong (30) étant réalisé dans un élément en tôle (28),
**caractérisé en ce que** le trou oblong (30) est associé à la structure basculante (104) et l'élément d'entraînement (32) est associé à un levier de renvoi (34) couplé au dispositif à levier (18), lequel est articulé de manière pivotante sur la carrosserie du véhicule (102).

2. L'ensemble de protection anti-encastrement (10) selon la revendication 1, dans lequel l'axe de pivotement (34a) du levier de renvoi (34) est disposé sur la carrosserie du véhicule (102) à proximité immédiate de l'axe de basculement (106) de la structure basculante (104).

3. L'ensemble de protection anti-encastrement (10) selon la revendication 1 ou 2, dans lequel le levier de renvoi (34) est formé de deux branches disposées à un angle l'une par rapport à l'autre (36, 38) disposés à un angle l'un par rapport à l'autre, dont l'un porte l'élément d'entraînement (32) et l'autre est relié au dispositif à levier (18), le levier de renvoi (34) étant articulé de manière pivotante sur la carrosserie du véhicule (102) dans la zone de son sommet entre les deux branches (36, 38).

4. L'ensemble de protection anti-encastrement (10) selon la revendication 3, dans lequel les deux branches (36, 38) sont espacées dans une direction perpendiculaire au plan qu'elles définissent et sont reliées entre elles de manière solidaire en rotation au moyen d'un élément d'arbre (40).

5. L'ensemble de protection anti-encastrement (10) selon l'une des revendications précédentes,
dans lequel le levier de renvoi (34) est articulé sur la carrosserie du véhicule (102) de telle sorte qu'un mouvement de l'élément d'entraînement (32) dans le trou oblong (30) est transformé en un mouvement sur une plus grande course à l'extrémité opposée du levier de renvoi (34), en particulier parce que la branche (36) associée à l'élément d'entraînement (34) est plus courte que la branche (38) reliée au dispositif à levier (18).

6. L'ensemble de protection anti-encastrement (10) selon l'une des revendications précédentes,
dans lequel le trou oblong (30) est en forme de faucille avec une première et une deuxième sections (30a, 30b) ainsi qu'un sommet entre la première et la deuxième sections (30a, 30b), le passage de la première partie (30a) par l'élément d'entraînement (32) provoquant l'actionnement du dispositif à levier (18) et le passage consécutif de la deuxième partie (30b) laissant le dispositif à levier (18) sensiblement sans force.

7. L'ensemble de protection anti-encastrement (10) selon l'une des revendications précédentes, dans lequel le dispositif à levier (18) comprend
- un élément de tige (22) qui est couplé de manière pivotante au dispositif de renvoi (20) dans la zone d'une première extrémité , et
- un premier et un deuxième éléments de liaison (24, 26) qui sont chacun couplés de manière pivotante à l'élément de tige (22) dans la zone d'une deuxième extrémité de celui-ci,
dans lequel
∘ le premier élément de liaison (24) est articulé de manière pivotante à l'une des sections d'intersection (16) de la carrosserie (102) du véhicule ; et
∘ le deuxième élément de liaison (213) est articulé de manière pivotante sur la partie de liaison de barrière (14) de la barrière anti-encastrement correspondante (12).

8. L'ensemble de protection anti-encastrement (10) selon la revendication 7, dans lequel les premier et deuxième éléments de liaison (24, 26) sont articulés à l'élément de tige (22) au moyen d'un axe de pivotement commun (22d).

9. L'ensemble de protection anti-encastrement (10) selon l'une des revendications précédentes,
dans lequel le pivotement de la barrière de protection anti-encastrement (12) entre sa position de fonctionnement et sa position de libération s'effectue sur un angle d'environ 180°.

10. L'ensemble de protection anti-encastrement selon l'une des revendications précédentes, comprenant deux dispositifs de levier et deux dispositifs de renvoi, qui sont respectivement couplés à la barrière de protection anti-encastrement individuelle et se font face dans le sens de la largeur du véhicule à benne basculante dans la zone des deux sections d'interface de la carrosserie du véhicule.

11. Un véhicule à benne basculante (100) avec une carrosserie (102) et une structure basculante (104) pouvant basculer vers l'arrière par rapport à la carrosserie (102), comprenant en outre un ensemble de protection anti-encastrement (10) selon l'une des revendications précédentes.

12. Le véhicule à benne basculante (100) selon la revendication 11,
dans lequel la barrière de protection anti-encastrement (12) est disposée dans sa position de libération entre la carrosserie (102) et la structure basculante (104).

13. Le véhicule à benne basculante (100) selon la revendication 11 ou 12,
dans lequel la structure basculante (104) est couplée à la carrosserie (102) de telle sorte que, lorsqu'elle bascule, elle parcourt un angle d'environ 47°.
